# EUROPEAN PATENT SPECIFICATION

(11) **EP 3 399 216 B1**
(45) Date of publication and mention of the grant of the patent: **23.09.2020**
(21) Application number: 17382249.5
(22) Date of filing: 04.05.2017
(51) Int. Cl.: F16H 57/08, F03D 15/00

(54) **PLANET CARRIERS FOR GEARBOXES**
PLANETENTRÄGER FÜR GETRIEBE
PORTE-SATELLITES POUR BOÎTES DE VITESSES

(43) Date of publication of application: 07.11.2018
(73) Proprietor: General Electric Company, Schenectady, NY 12345 (US)
(72) Inventor: Checa Caballero, Javier, 08030 BARCELONA (ES)
(74) Representative: de Rooij, Mathieu Julien

(56) References cited:
- EP-A2- 2 500 564
- CN-U- 203 868 298
- GB-A- 2 496 256

## Description

The present disclosure relates to planet carriers for gearboxes, and more particularly to gearboxes that are especially suitable for wind turbines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation is normally transmitted through a rotor shaft to a generator, either directly ("directly driven") or through the use of a gearbox. This way, the generator can produce electricity which can be supplied to the electrical grid.

In wind turbines using a gearbox, the rotation of a slow speed shaft (which commonly is the rotor shaft), is transformed through suitable gearing to rotation of a high speed shaft, which drives the generator. To this end, a gearbox may comprise one or more stages.

It is known to use planetary gearing (epicyclic gearing) in wind turbines for this speed increase. Planetary gearing systems are generally more complex than other gearing systems, but offer advantages such as a large speed increase in a relatively small volume, purely torsional reactions between gears and coaxial input and output shafts.

A gearbox of this type normally comprises one or more planetary stages. A planetary stage comprises planet gears that are geared with a central sun gear and with a ring gear (or "annular gear") through corresponding teeth of the gears. The planet gears are typically supported in a planet carrier.

Depending on the configuration of the planetary gearbox, the annular gear can be fixed in place (whereas the sun gear and planet carrier rotate) or the planet carrier can be fixed in place (and the annular gear and sun gears rotate) or the sun gear may be fixed (and the planet carrier and annular gear rotate).

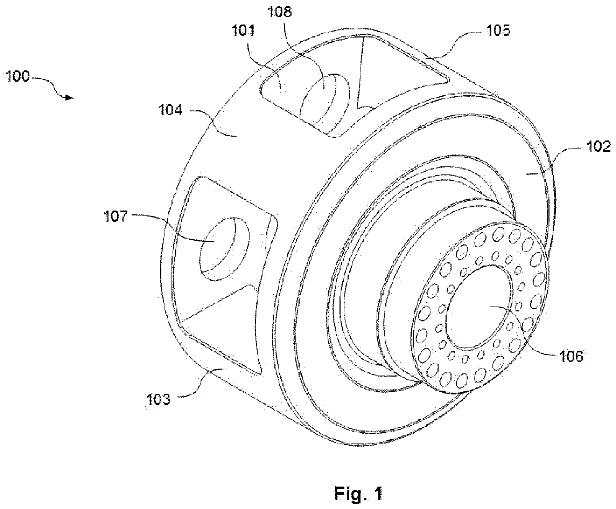

A prior art configuration of a planet carrier is schematically illustrated in Fig. 1.

In Fig. 1, a planet carrier 100 is shown having a first plate (or downstream plate) 101 and a second plate (or upstream plate) 102 with a plurality of evenly distributed columns 103 - 105 connecting the plates 101, 102. The columns 103 - 105 are shown substantially perpendicular to the first and second plates 101, 102. Spaces between the columns 103 - 105 are suitably occupied by the planet gears (not shown). The planet gears may be arranged to mesh with a central sun and with an annular gear.

The first plate 101 supports first ends of planet shafts (not shown) supporting the planet gears, and the second plate 102 supports the opposite ends of the planet shafts. Fig. 1 shows holes 107, 108 through which first ends of the planet shafts are supported by the first plate 101.

The low speed shaft (not shown) can be connected to the second plate 102 through a connection arrangement 106 such that the planet carrier rotates with the low speed shaft.

As the planet gears mesh with a fixed annular gear, and with a sun gear, the low speed of the planet carrier is converted into a fast rotation of the sun gear. A generator shaft may be coupled to the sun gear. Alternatively, a second stage of the gearbox may be connected to the sun gear to further increase the speed of an output shaft.

Planet carriers are normally fabricated through a manufacturing process (e.g. casting process) that may be complex at least for the following reasons. Planet carriers usually have a complex geometry design because the dimensions and distribution of the columns are constrained to the dimensions of the planet gears, since the columns are designed to fit void spaces between planet gears. Additionally, during operation, planet carriers are generally subjected to severe load conditions.

Gearboxes of the type previously described are not limited to the field of wind turbines only. Similar gearboxes based on same or similar principles may also be found e.g. in steam turbines and water turbines.

CN203868298U discloses a planet carrier of a gearbox for a wind turbine, comprising a front plate and a rear plate connected by evenly distributed columns. The number of columns is the same as the number of planet shafts supporting planet gears, and every column is located between adjacent planet shafts.

### SUMMARY

A planet carrier is provided for a gearbox configured to transfer rotational torque from a low speed shaft to a high speed shaft. That is, an input rotational speed (of the low speed shaft) is transformed by the gearbox into an output rotational speed (of the high speed shaft) higher than the input speed.

The planet carrier is configured to rotate jointly with the low speed shaft in a given direction of rotation, which may be referred to as "natural direction". The expression "natural direction" is used herein to indicate the direction in which the low speed shaft normally rotates during operation. In exceptional cases, the low speed shaft can rotate in an unnatural direction (opposite to the natural direction) such as e.g. when a grid loss situation occurs in case of a wind turbine.

The planet carrier comprises a downstream plate, an upstream plate, and a plurality of columns connecting said downstream and upstream plates. At a downstream side (close to the high speed shaft), the downstream plate supports downstream ends of planet shafts supporting planet gears. At an upstream side (close to the low speed shaft), the upstream plate supports upstream ends of the planet shafts. The columns are arranged to connect the downstream and upstream plates with filleted junctions between the columns and plates.

The filleted junctions have a leading filleted portion and a trailing filleted portion according to the (natural) direction of rotation. The planet carrier of the invention is characterized in that a curvature radius of the leading filleted portion of the filleted junctions with the downstream plate is greater than a curvature radius of the leading filleted portion of the filleted junctions with the upstream plate.

In a wind turbine, as previously commented, the input (of the low speed shaft) is received from a rotor of the wind turbine and the output (of the high speed shaft) is transferred to a generator of the wind turbine. In this context, a gearbox can be subjected to high loads during operation. These high loads are mainly concentrated at the junctions between the columns and plates of the planet carrier.

In the natural direction of rotation, the leading filleted portions of the filleted junctions with the downstream plate is subjected to a tensile stress, and the leading filleted portion (in the natural direction) of the filleted junctions with the upstream plate is subjected to a compressive stress.

The existence and amounts of said tensile and compressive stresses can be determined by performing an analysis based on a Finite Element Method (FEM).

The proposed planet carrier can withstand loads more effectively in comparison to prior art planet carriers, since the leading sides (in the rotation direction) of the junctions between columns and plates are filleted with a greater or smaller curvature radius depending on the type of stress regularly suffered by the leading side of the junction.

In particular, filleted sides of the junctions that are normally subjected to tensile stress are filleted with a curvature radius greater than the curvature radius of those other filleted sides of the junctions that are mainly affected by compressive stress.

Increasing a curvature radius of a filleted side where tensile stress regularly occurs permits a better distribution of the stress along the filleted side and, therefore, its absorption or dissipation by the filleted side.

With the proposed differentiation of the curvature radii at the filleted junctions depending on the type of stress, loads are withstood in an improved manner in comparison with prior art planet carriers.

When a grid loss situation occurs, the rotor of the wind turbine may be subjected to torsional oscillations comprising a rotational component in the natural direction and a rotational component in the unnatural direction (opposite to the natural direction). The rotational component in the unnatural direction is also suffered by the gearbox and, in particular, by the planet carrier of the gearbox.

When the rotational component in the unnatural direction occurs, the leading filleted portion of the filleted junctions with the downstream plate suffers a compressive stress instead of the tensile stress caused in the natural direction. Moreover, the leading filleted portion of the filleted junctions with the upstream plate is subjected a tensile stress instead of the compressive stress suffered in the natural direction.

However, the loads during rotation in the unnatural direction during such a grid loss are generally smaller than the loads in normal operation with the prevailing rotation in the natural direction. The loads exceptionally caused in the unnatural direction may thus have a minor (negative) impact on the leading portions of the junctions between columns and plates. Hence, the planet carrier proposed herein is able to withstand loads in an improved manner with respect to prior art planet carriers in most operational circumstances.

Further, a planet carrier for a gearbox configured to transfer rotational torque from a low speed shaft at an upstream side to a high speed shaft at a downstream side is provided. The planet carrier is configured to rotate jointly with the low speed shaft in a direction of rotation and around an axis of rotation. The planet carrier comprises a downstream plate at the downstream side supporting downstream ends of planet shafts supporting planet gears, an upstream plate at the upstream side supporting upstream ends of the planet shafts, and a plurality of columns connecting the downstream and upstream plates. The columns have a substantially constant cross-section, and are inclined with respect to the axis of rotation.

### BRIEF DESCRIPTION OF THE DRAWINGS

Non-limiting examples of the present disclosure will be described in the following, with reference to the appended drawings, in which:
Fig. 1 is a schematic representation of a planet carrier used in prior art gearboxes.
Fig. 2 is a schematic representation of a planet carrier of a gearbox according to an example.
Fig. 3 is a schematic partial view of a planet carrier similar to the one of Fig. 1, and
Fig. 4 - Fig. 8 schematically illustrate several modifications thereof to form planet carriers for gearboxes, according to examples of the present disclosure.

### DETAILED DESCRIPTION OF EXAMPLES

Fig. 1 has been commented on before.

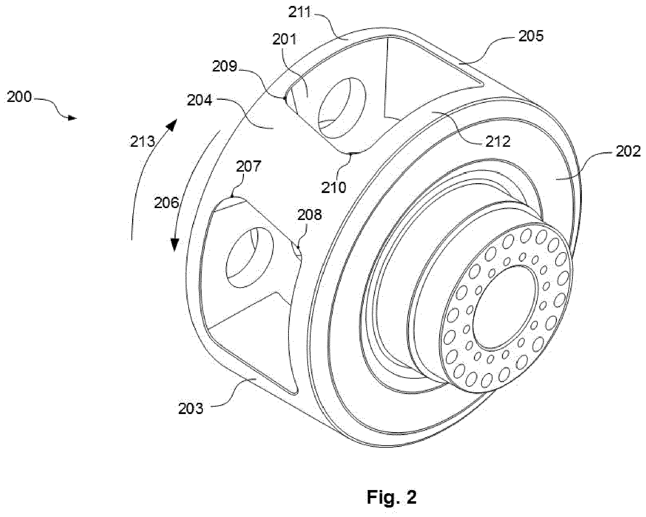

Fig. 2 is a schematic representation of a planet carrier of a gearbox according to an example. This gearbox may be configured to be used in a wind turbine, for example.

The planet carrier 200 is shown having a first circular plate 201, a second circular plate 202, and a plurality of columns 203 - 205 connecting said plates 201, 202 with filleted junctions 207 - 210 between the columns 203 - 205 and the plates 201, 202.

The first plate (or downstream plate) 201 may comprise a ledge 211 extending along the 360° of a rim of the first plate 201. The second plate (or upstream plate) 202 may also comprise a ledge 212 extending along the 360° of a rim of the second plate 202.

In the particular example shown, the columns 203 - 205 extend from the ledges 211, 212 of the first and second plates 201, 202 with filleted junctions.

In alternative configurations, the plates 201, 202 may not comprise ledges 211, 212, in which case the columns 203 - 205 may be directly coupled to corresponding regions of the plates 201, 202 with junctions similar to the filleted junctions 207 - 210 of Fig. 2.

According to a natural direction of rotation 206 in which the planet carrier 200 is normally rotated during operation of the wind turbine, a leading filleted portion 207 and a trailing filleted portion 209 of the junctions between the columns and the first plate (or downstream plate) 201 can be distinguished.

According to the same natural direction of rotation 206, a leading filleted portion 208 and a trailing filleted portion 210 of the junctions between the columns and the second plate (or upstream plate) 202 can also be distinguished.

As commented in other parts of the description, during operation of the wind turbine, the gearbox and, in particular, the planet carrier 200 may suffer strong loads, mainly at the junctions between the columns 203 - 205 and the plates 201, 202.

The curvature radius of the leading filleted portions 207 of the filleted junctions with the downstream plate 201 is greater than a curvature radius of the leading filleted portion 208 of the filleted junctions with the upstream plate.

In examples, such as the example of Fig. 2, the curvature radius of the trailing filleted portions 210 of the filleted junctions with the upstream plate 202 is greater than a curvature radius of the trailing filleted portion 209 of the filleted junctions with the upstream plate 202.

The leading filleted portion 207 of the junctions between the columns and the downstream plate 201, and the trailing filleted portion 210 of the junctions between the columns and the upstream plate 202 are subjected to tensile stresses in the natural direction of rotation 206.

The leading filleted portion 208 of the junctions between the columns and the upstream plate 202, and the trailing filleted portion 209 of the junctions between the columns and the downstream plate 201 are subjected to compressive stresses in the natural direction of rotation 206.

In the example of Fig. 2, the filleted portions 207, 210 that are subjected to tensile stresses during rotation in the natural direction 206 have a curvature radius greater than the curvature radius of the filleted portions 208, 209 that are subjected to compressive stresses.

In particular examples, the curvature radius of the leading filleted portion 207 of the filleted junctions with the downstream plate 201 and the curvature radius of the trailing filleted portion 210 of the filleted junctions with the upstream plate 202 may be substantially of the same magnitude.

A gearbox comprising a planet carrier such as the one described in relation to Fig. 2 may withstand loads in a more effective manner in comparison with prior art gearboxes. This is because the junctions between the columns 203 - 205 and plates 201, 201 are filleted at the leading side 207, 208 and at the trailing side 209, 210 with particular curvature radii aimed at optimally withstanding loads, depending on the type of stress normally suffered at corresponding sides of the junctions.

In particular, the sides of the junctions 207, 210 that are normally subjected to tensile stresses are filleted with a curvature radius greater than the curvature radius of those sides of the junctions 208, 209 affected by compressive stresses. With these "tailored" curvature radii at the sides of the filleted junctions depending on the type of stress, loads are withstood more effectively than in prior art gearboxes.

When a grid loss situation occurs, the rotor of the wind turbine may suffer torsional oscillations with a rotational component in the natural direction 206 and a rotational component in the unnatural direction 213 (opposite to the natural direction 206). The rotational component in the unnatural direction 213 also affects the gearbox and, in particular, the planet carrier 200 of the gearbox.

In the unnatural direction 213, the leading portion 207 of the filleted junctions with the downstream plate 201 and the trailing portion 210 of the filleted junctions with the upstream 202 are subjected to a compressive stress instead of the tensile stress caused in the natural direction 206.

Also in the unnatural direction 213, the leading portion 208 of the filleted junctions with the upstream plate 202 and the trailing portion 209 of the filleted junctions with the downstream plate 201 are subjected to a tensile stress instead of the compressive stress caused in the natural direction 206.

Nevertheless, the loads during rotation in the unnatural direction 213 during such a grid loss are generally smaller than the loads in normal operation with the prevailing rotation in the natural direction 206. Accordingly, the loads caused in the unnatural direction 213 may have a minor (negative) impact on the planet carrier 200. So, the gearbox comprising the planet carrier 200 may withstand loads effectively in most operational circumstances.

It may be seen in figure 2, that the plurality of columns connecting the downstream and upstream plates have a substantially constant cross-section, and are inclined with respect to the axis of rotation. In particular, in the example shown in figure 2, a portion of the columns connected to the downstream plate is displaced in the direction of rotation with respect to a portion of the columns connected to the upstream plate.

A planet carrier according to figure 2 may be used e.g. in a gearbox of a wind turbine. In particular, at the first stage of a gearbox, where the torque loads are higher than at further stages, the planet carrier according to this example may be useful. In some examples, the gearbox may be an epicyclic gearbox comprising one or more epicyclic stages.

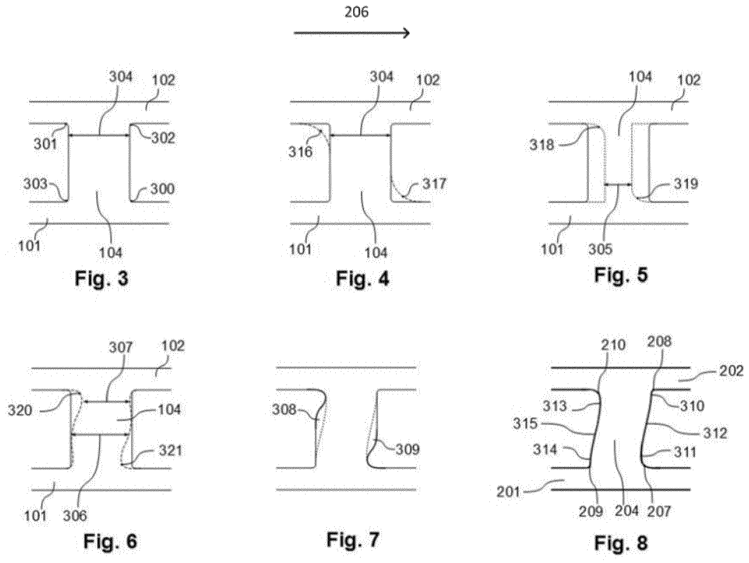

Fig. 3 is a schematic partial view of a planet carrier similar to the one of Fig. 1. In particular, a sub-structure of the planet carrier is shown including a column 104 connecting downstream and upstream plates 101, 102 respectively.

The column 104 has a width 304 and is perpendicularly arranged with respect to the plates 101, 102. Leading and trailing filleted sides 300-303 of the junctions between the column 104 and the plates 101, 102 are shown having substantially the same curvature radius.

Fig. 4 - Fig. 8 schematically illustrate modifications that can be made on the columns of a planet carrier similar to the one of Fig. 1 and Fig. 3 to arrive at gearboxes according to examples of the present disclosure. The (natural) direction of rotation is indicated with reference sign 206.

Fig. 4 shows a modification resulting in a new leading filleted portion 317 of the junction between the column 104 and the downstream plate 101, and a new trailing filleted portion 316 of the junction between the column 104 and the upstream plate 102.

The formation of said new filleted portions 317, 316 may be seen as involving an addition of material to previous filleted portions 300, 301 of Fig. 3. Said addition of material causes the new filleted portions 317, 316 to define a curvature radius greater than the curvature radius of the previous filleted portions 300, 301, respectively. Stress concentrations at these junctions may thus be reduced.

With this modification, the filleted portions 317, 316 that are normally subjected to tensile stress are configured with a curvature radius greater than the curvature radius of the other filleted portions that are normally affected by compressive stress. Furthermore, the width 304 of the column 104 is not reduced, but it may be generally the same (as shown in the figure).

Therefore, the proposed modification may permit forming a planet carrier for an improved gearbox that is able to effectively withstand loads in most operational situations. However, this modification is only possible if sufficient space remains between neighbouring columns to fit the planet gears between them and this is not always the case.

Fig. 5 shows another modification that also forms a new leading filleted portion 319 of the junction between the column 104 and the downstream plate 101, and a new trailing filleted portion 318 of the junction between the column 104 and the upstream plate 102.

In this particular case, the modification may be seen as a reduction of material implemented in such a way that the new filleted portions 319, 318 have a curvature radius greater than the curvature radius of the previous filleted portions 300, 301, respectively.

It is shown that the width of the column 104 is generally reduced, thereby resulting in a new width 305 smaller than the previous width 304. An aspect of this modification is therefore that larger void spaces between columns may exist. There will thus generally be sufficient space to fit the planetary gears, but the column has a reduced width and may not be able to withstand the same loads as before (unless a higher grade material is used).

Besides, with this modification, the filleted portions 319, 318 that are subjected to tensile stress have a curvature radius greater than the curvature radius of the other filleted portions affected by compressive stress.

Fig. 6 shows a further modification that also results in a new leading filleted portion 321 of the junction between the column 104 and the downstream plate 101, and a new trailing filleted portion 320 of the junction between the column 104 and the upstream plate 102.

In this particular example, the modification may be understood as a "selective" reduction of material only where it is needed to form the filleted portions 321, 320 with an increased curvature radius to better withstand tensile stresses. The proposed selective reduction of material in this case results in a non-uniform reduction of the width of the column 104.

In any case, this modification does not produce reductions of the column width 306, 307 to an excessive extent, since the reductions of material for obtaining the new filleted portions 321 and 320 are respectively located at opposite longitudinal end portions of the column, where the loss of material is less critical.

Hence, an aspect of this modification is that planet carriers with a relatively good balance between structural strength and weight may be obtained for gearboxes.

Also with this modification, filleted portions 321, 320 which are normally affected by tensile stress, have a curvature radius greater than the curvature radius of the other filleted portions which are subjected to compressive stress. Therefore, this modification may permit obtaining planet carriers with an improved capability of withstanding loads at the junctions between columns and plates.

Fig. 7 shows a modification based on reducing some excess material resulting from the modification of the previous figure. If the columns according to Fig. 6 are dimensioned such that the narrowest portion 307 can withstand the loads, the wider portions 306 of the columns have excess material. In particular, the modification of Fig. 6 may produce a portion 308 at a trailing side of the column between the trailing filleted portions, and a portion 309 at a leading side of the column between the leading filleted portions that can be regarded as excess material.

Accordingly, the protuberant portions 308, 309 may be removed in such a way that the above drawbacks are resolved.

Fig. 8 shows a column resulting from the modification suggested in the previous figure. This column is similar to the columns of the planet carrier of Fig. 2. In particular, the plurality of columns connecting the downstream and upstream plates have a substantially constant cross-section, and are inclined with respect to the axis of rotation. The portions of the columns connected to the downstream plate are displaced in the direction of rotation with respect to a portion of the columns connected to the upstream plate.

The reference signs of said Fig. 2 have been reused in this figure to indicate the same or similar elements.

The example of Fig. 8 has been improved with respect to the example of Fig. 6 in terms of weight and strength. Moreover, sufficient space is available for the planet gears and their lubrication.

It is shown in the figure of this example that the column 204 has a leading edge 312 extending between (an end 311 of) the leading filleted portion 207 of the filleted junction with the first plate 201 and (an end 310 of) the leading filleted portion 208 of the filleted junction with the second plate 202 along a substantially straight line.

The figure also shows that in this example, the column 204 has a trailing edge 315 extending between (an end 314 of) the trailing filleted portion 209 of the filleted junction with the first plate 201 and (an end 313 of) the trailing filleted portion 210 of the filleted junction with the second plate 202 along a substantially straight line. These substantially flat surfaces or substantially straight rims 312, 315 may be directly obtained as a result of a casting process aimed at producing a complete planet carrier as a single, integral piece.

Alternatively, the substantially flat surfaces or substantially straight rims 312, 315 may be obtained as a result of machining an excess material of the column.

In any of the described examples, a cross-section of the filleted junctions with the first plate and a cross-section of the filleted junctions with the second plate may be substantially of the same magnitude. In particular, all the columns may have substantially the same dimensions.

## Claims

1. A planet carrier (200) for a wind turbine gearbox configured to transfer rotational torque from a low speed shaft at an upstream side to a high speed shaft at a downstream side, wherein the planet carrier (200) is configured to rotate jointly with the low speed shaft in a direction of rotation (206), the planet carrier (200) comprising
a downstream plate (201) at the downstream side supporting downstream ends of planet shafts supporting planet gears;
an upstream plate (202) at the upstream side supporting upstream ends of the planet shafts; and
a plurality of columns (203 - 205) connecting the downstream and upstream plates (201, 202) having filleted junctions between the columns (203 - 205) and plates (201, 202); and wherein
the filleted junctions have a leading filleted portion (207, 208) and a trailing filleted portion (209, 210) in the direction of rotation (206);
**characterized in that** a curvature radius of the leading filleted portion (207) of the filleted junctions with the downstream plate (201) is greater than a curvature radius of the leading filleted portion (208) of the filleted junctions with the upstream plate (202).

2. A planet carrier according to claim 1, wherein a curvature radius of the trailing filleted portion (210) of the filleted junctions with the upstream plate (202) is greater than a curvature radius of the trailing filleted portion (209) of the filleted junctions with the downstream plate (201).

3. A planet carrier according to claims 1 and 2, wherein the curvature radius of the leading filleted portion (207) of the filleted junctions with the downstream plate (201) and the curvature radius of the trailing filleted portion (210) of the filleted junctions with the upstream plate (202) are substantially of the same magnitude.

4. A planet carrier according to any of claims 2 to 3, wherein the columns (203 - 205) of the planet carrier (200) have a trailing edge extending between the trailing filleted portion (209) of the filleted junctions with the downstream plate (201) and the trailing filleted portion (210) of the filleted junctions with the upstream plate (202) along a substantially straight line.

5. A planet carrier according to any of claims 1 to 4, wherein the columns (203 - 205) of the planet carrier (200) have a leading edge extending between the leading filleted portion (207) of the filleted junctions with the downstream plate (201) and the leading filleted portion (208) of the filleted junctions with the upstream plate (202) along a substantially straight line.

6. A planet carrier according to any of claims 1 to 5, wherein a cross-section of the filleted junctions with the downstream plate (201) and a cross-section of the filleted junctions with the upstream plate (202) are substantially of the same magnitude.

7. A planet carrier according to any of claims 1 to 6, wherein the columns have a substantially constant cross-section between the filleted junctions with the downstream plate and the filleted junctions with the upstream plate.

8. A planet carrier according to any of claims 1 to 7, wherein all the columns (203 - 205) have substantially the same dimensions.

9. A wind turbine gearbox comprising a planet carrier (200) according to any of claims 1 to 8.

10. A wind turbine gearbox according to claim 9, wherein the planet carrier (200) is at a first stage of the gearbox.

11. A wind turbine comprising a gearbox according to claim 9 or 10.

## Patentansprüche

1. Planetenträger (200) für ein Windturbinengetriebe, das konfiguriert ist, um ein Drehmoment von einer Welle mit niedriger Drehzahl an einer stromaufwärtigen Seite auf eine Welle mit hoher Drehzahl an einer stromabwärtigen Seite zu übertragen, wobei der Planetenträger (200) konfiguriert ist, um sich gemeinsam mit der Welle mit niedriger Drehzahl in Drehrichtung (206) zu drehen, wobei der Planetenträger (200) umfasst
eine stromabwärtige Platte (201) an der stromabwärtigen Seite, die stromabwärtige Enden von Planetenwellen trägt, die Planetenräder tragen;
eine stromaufwärtige Platte (202) an der stromaufwärtigen Seite, die stromaufwärtige Enden der Planetenwellen trägt; und
eine Vielzahl von Säulen (203-205), die die stromabwärtigen und stromaufwärtigen Platten (201, 202) verbinden, die abgerundete Verbindungen zwischen den Säulen (203-205) und den Platten (201, 202) aufweisen; und wobei
die abgerundeten Verbindungen einen abgerundeten Vorderabschnitt (207, 208) und einen abgerundeten Hinterabschnitt (209, 210) in Drehrichtung (206) aufweisen;
**dadurch gekennzeichnet, dass** ein Krümmungsradius des abgerundeten Vorderabschnitts (207) der abgerundeten Verbindungen mit der stromabwärtigen Platte (201) größer ist als ein Krümmungsradius des abgerundeten Vorderabschnitts (208) der abgerundeten Verbindungen mit der stromaufwärtigen Platte (202).

2. Planetenträger nach Anspruch 1, wobei ein Krümmungsradius des abgerundeten Hinterabschnitts (210) der abgerundeten Verbindungen mit der stromaufwärtigen Platte (202) größer ist als ein Krümmungsradius des abgerundeten Hinterabschnitts (209) der abgerundeten Verbindungen mit der stromabwärtigen Platte (201).

3. Planetenträger nach den Ansprüchen 1 oder 2, wobei der Krümmungsradius des abgerundeten Vorderabschnitts (207) der abgerundeten Verbindungen mit der stromabwärtigen Platte (201) und der Krümmungsradius des abgerundeten Hinterabschnitts (210) der abgerundeten Verbindungen mit der stromaufwärtigen Platte (202) im Wesentlichen die gleiche Größe aufweisen.

4. Planetenträger nach einem der Ansprüche 2 bis 3, wobei die Säulen (203-205) des Planetenträgers (200) eine Hinterkante aufweisen, die sich zwischen dem abgerundeten Hinterabschnitt (209) der abgerundeten Verbindungen mit der stromabwärtigen Platte (201) und dem abgerundeten Hinterabschnitt (210) der abgerundeten Verbindungen mit der stromaufwärtigen Platte (202) entlang einer im Wesentlichen geraden Linie erstreckt.

5. Planetenträger nach einem der Ansprüche 1 bis 4, wobei die Säulen (203-205) des Planetenträgers (200) eine Vorderkante aufweisen, die sich zwischen dem abgerundeten Vorderabschnitt (207) der abgerundeten Verbindungen mit der stromabwärtigen Platte (201) und dem abgerundeten Vorderabschnitt (208) der abgerundeten Verbindungen mit der stromaufwärtigen Platte (202) entlang einer im Wesentlichen geraden Linie erstreckt.

6. Planetenträger nach einem der Ansprüche 1 bis 5, wobei ein Querschnitt der abgerundeten Verbindungen mit der stromabwärtigen Platte (201) und ein Querschnitt der abgerundeten Verbindungen mit der stromaufwärtigen Platte (202) im Wesentlichen die gleiche Größe aufweisen.

7. Planetenträger nach einem der Ansprüche 1 bis 6, wobei die Säulen einen im Wesentlichen konstanten Querschnitt zwischen den abgerundeten Verbindungen mit der stromabwärtigen Platte und den abgerundeten Verbindungen mit der stromaufwärtigen Platte aufweisen.

8. Planetenträger nach einem der Ansprüche 1 bis 7, wobei alle Säulen (203-205) im Wesentlichen die gleichen Abmessungen aufweisen.

9. Windturbinengetriebe, umfassend einen Planetenträger (200) nach einem der Ansprüche 1 bis 8.

10. Windturbinengetriebe nach Anspruch 9, wobei sich der Planetenträger (200) in einer ersten Stufe des Getriebes befindet.

11. Windturbine, umfassend ein Getriebe nach Anspruch 9 oder 10.

## Revendications

1. Porte-satellites (200) pour une boîte de vitesses d'éolienne configurée pour transférer le couple de rotation d'un arbre à basse vitesse d'un côté amont à un arbre à grande vitesse d'un côté aval, le porte-satellites (200) étant configuré pour tourner conjointement avec l'arbre à basse vitesse dans un sens de rotation (206), le porte-satellites (200) comprenant
une plaque aval (201) sur le côté aval supportant les extrémités aval des arbres planétaires supportant les engrenages planétaires ;
une plaque amont (202) sur le côté amont supportant les extrémités amont des arbres planétaires ; et
une pluralité de colonnes (203 - 205) reliant les plaques aval et amont (201, 202) ayant des jonctions filetées entre les colonnes (203 - 205) et les plaques (201, 202) ; et
les jonctions filetées ayant une partie filetée avant (207, 208) et une partie filetée arrière (209, 210) dans le sens de rotation (206) ;
**caractérisé en ce que** le rayon de courbure de la partie filetée avant (207) des jonctions filetées avec la plaque aval (201) est supérieur au rayon de courbure de la partie filetée avant (208) des jonctions filetées avec la plaque amont (202).

2. Porte-satellites selon la revendication 1, dans lequel le rayon de courbure de la partie filetée arrière (210) des jonctions filetées avec la plaque amont (202) est supérieur au rayon de courbure de la partie filetée arrière (209) des jonctions filetées avec la plaque aval (201).

3. Porte-satellites selon les revendications 1 et 2, dans lequel le rayon de courbure de la partie filetée avant (207) des jonctions filetées avec la plaque aval (201) et le rayon de courbure de la partie filetée arrière (210) des jonctions filetées avec la plaque amont (202) sont sensiblement de la même grandeur.

4. Porte-satellites selon l'une quelconque des revendications 2 à 3, dans lequel les colonnes (203 - 205) du porte-satellites (200) ont un bord de fuite s'étendant entre la partie filetée arrière (209) des jonctions filetées avec la plaque aval (201) et la partie filetée arrière (210) des jonctions filetées avec la plaque amont (202) le long d'une ligne sensiblement droite.

5. Porte-satellites selon l'une quelconque des revendications 1 à 4, dans lequel les colonnes (203 - 205) du porte-satellites (200) ont un bord d'attaque s'étendant entre la partie filetée avant (207) des jonctions filetées avec la plaque aval (201) et la partie filetée avant (208) des jonctions filetées avec la plaque amont (202) le long d'une ligne sensiblement droite.

6. Porte-satellites selon l'une quelconque des revendications 1 à 5, dans lequel une coupe transversale des jonctions filetées avec la plaque aval (201) et une coupe transversale des jonctions filetées avec la plaque amont (202) sont sensiblement de la même grandeur.

7. Porte-satellites selon l'une quelconque des revendications 1 à 6, dans lequel les colonnes ont une section transversale sensiblement constante entre les jonctions filetées avec la plaque aval et les jonctions filetées avec la plaque amont.

8. Porte-satellites selon l'une quelconque des revendications 1 à 7, dans lequel toutes les colonnes (203 - 205) ont sensiblement les mêmes dimensions.

9. Boîte de vitesses d'éolienne comprenant un porte-satellites (200) selon l'une quelconque des revendications 1 à 8.

10. Boîte de vitesses d'éolienne selon la revendication 9, dans laquelle le porte-satellites (200) se trouve au premier étage de la boîte de vitesses.

11. Éolienne comprenant une boîte de vitesses selon la revendication 9 ou 10.
